(19) Europäisches Patentamt
European Patent Office
Office européen des brevets

(11) Publication number: **0 456 334 A2**

# (12) EUROPEAN PATENT APPLICATION

(21) Application number: **91250092.3**

(22) Date of filing: **09.04.91**

(51) Int. Cl.[5]: **A01N 43/78**, //(A01N43/78, 61:00,47:36,47:30,43:707,43:70, 43:36,43:12,37:26,37:22,33:18)

(30) Priority: **12.04.90 DE 4012512**

(43) Date of publication of application: **13.11.91 Bulletin 91/46**

(84) Designated Contracting States: **AT BE CH DE DK ES FR GB GR IT LI LU NL SE**

(71) Applicant: **SCHERING AKTIENGESELLSCHAFT**
**Müllerstrasse 170/178 Postfach 65 03 11**
**W-1000 Berlin 65(DE)**

(72) Inventor: **Johann, Gerhard, Dr.**
**Hermsdorfer Damm 147**
**W-1000 Berlin 28(DE)**
Inventor: **Rees, Richard, Dr.**
**Speerweg 8**
**W-1000 Berlin 28(DE)**

## (54) Heribicidal composition with synergistic activity.

(57) The invention relates to a new herbicidal composition with synergistic activity which comprises, as active components, a mixture of

a) 1-[6-fluoro-2-oxo-3-(2-propynyl)-2,3-dihydrobenzothiazol-5-yl]-3,4-dimethyl-3-pyrroline-2,5(1H)-dione and

b) a herbicide from the groups of those which directly or indirectly, demonstrate inhibition of cell division or possess growth promotion activity.

EP 0 456 334 A2

This invention relates to a new herbicidal composition having synergistic activity comprising a mixture of 1-[6-fluoro-2-oxo-3-(2-propynyl)-2,3-dihydrobenzothiazol-5-yl]-3,4-dimethyl-3-pyrroline-2,5(1H)-dione and a herbicide from the groups of those which directly or indirectly inhibit photosynthesis, demonstrate inhibition of cell division or possess growth promotion activity.

The herbicidal activity of 1-[6-fluoro-2-oxo-3-(2-propynyl)-2,3-dihydrobenzothiazol-5-yl]-3,4-dimethyl-3-pyrroline-2,5(1H)-dione is already known (EP 311 135). This compound has the following chemical structure

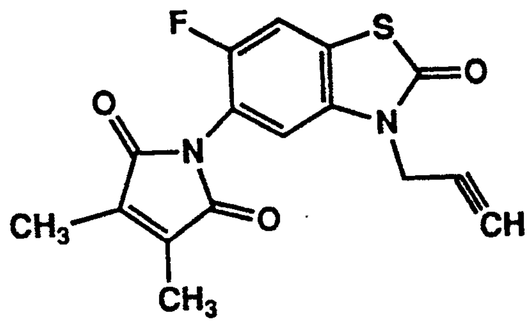

Herbicides from the groups of those which inhibit directly or indirectly photosynthesis, demonstrate inhibition of cell division or possess growth promotion activity are generally known. The known substances however are not always satisfactory in their activity in all areas of use.

It has now been found that a herbicidal composition which comprises, as active components, a mixture of

a) 1-[6-fluoro-2-oxo-3-(2-propynyl)-2,3-dihydrobenzothiazol-5-yl]-3,4-dimethyl-3-pyrroline-2,5(1H)-dione and

b) a herbicide from the groups of those which directly or indirectly, demonstrate inhibition of cell division or possess growth promotion activity

shows especially high activity without losing the selectivity properties in agricultural crops.

Surprisingly the herbicidal activity of the combination of the active ingredients of the invention is essentially higher than the individual components and also of the sum of the individual components. A synergistic effect is also seen.

Especially suitable are mixtures which contain as component b), a herbicide which directly or indirectly inhibits photosynthesis selected from the group consisting of atrazine, cyanazine, simazine, metribuzin, linuron, isoproturon, methabenzthiazuron, chlortoluron, terbutryn and flurochloridone, a herbicide which demonstrates inhibition of cell division selected from the group consisting of pendimethalin, benfuresate, alachlor, metolachlor, propachlor, trifluralin and ethofumesate or a herbicide that possesses growth regulant activity, such as dicamba.

Of the herbicides that directly or indirectly inhibit photosynthesis:
atrazine is the common name for 2-chloro-4-ethylamino-6-isopropylamino-1,3,5-triazine;
cyanazine is the common name for 2-chloro-4-(1-cyano-1-methylethylamino)-6-ethylamino-1,3,5-triazine;
simazine is the common name for 2-chloro-4,6-bis(ethylamino)-1,3,5-triazine;
metribuzin is the common name for 4-amino-6-*tert*.-butyl-4,5-dihydro-3-methylthio-1,2,4-triazin-5-one;
linuron is the common name for 3-(3,4-dichlorophenyl)-1-methoxy-1-methylurea;
isoproturon is the common name for 3-(4-isopropylphenyl)-1,1-dimethylurea;
methabenzthiazuron is the common name for 1-(benzothiazol-2-yl)-1,3-dimethylurea;
chlortoluron is the common name for 3-(3-chloro-4-methylphenyl)-1,1-dimethylurea;
terbutryn is the common name for 2-tert.-butylamino-4-ethylamino-6-methylthio-1,3,5-triazine, and
flurochloridone is the common name for 3-chloro-4-chloromethyl-1-[3-(trifluoromethyl)phenyl]-2-pyrrolidinone.

Of the herbicides that demonstrate inhibition of cell division:
pendimethalin is the common name for N-(1-ethylpropyl)-3,4-dimethyl-2,6-dinitroaniline;
benfuresate is the common name for 2,3-dihydro-3,3-dimethyl-5-benzofuranyl ethanesulphonate;
alachlor is the common name for 2-chloro-2',6'-diethyl-N-methoxymethylacetanilide;
metolachlor is the common name for 2-chloro-6'-ethyl-2'-methyl-N-(2-methoxy-1-methylethyl)acetanilide;,
propachlor is the common name for 2-chloro-N-isopropylacetanilide;
trifluralin is the common name for 2,6-dinitro-N,N-dipropyl-4-(trifluoromethyl)aniline, and
ethofumesate is the common name for 2-ethoxy-2,3-dihydro-3,3-dimethyl-5-benzofuranyl methanesulphonate.

Of the herbicides that possess growth regulant activity dicamba is the common name for 3,6 dichloro-2-methoxybenzoic acid.

The combination of active ingredients of the invention can used for example against the following plant species:

Dicotyledonous weeds of the species Sinapis, Lepidium, Galium, Stellaria, Matricaria, Anthemis, Galinsoga, Chenopodium, Brassica, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Lamium, Veronica, Abutilon, Datura, Viola, Galeopsis, Papaver, Centaurea and Chrysanthemum.

Monocotyledonous weeds of the species Avena, Alopecurus, Echinochloa, Setaria, Panicum, Digitaria, Poa, Eleusine, Brachiaria, Lolium, Bromus, Cyperus, Agropyron, Sagittaria, Monocharia, Fimbristylis, Eleocharis, Ischaemum and Apera.

The combinations can be applied pre or post-emergently, but generally pre-emergently. Selectivity is seen in range of crops such as maize, cereals and sunflowers. The rate of use lies between 0.001 and 5 kg/ha of the mixture, depending on the use. By using the mixtures for control of weeds the amount of herbicide needed can be generally reduced.

The weight ratio of component a) to b) is generally between 1:100 and 50:1.

The mixtures of the invention can also be used in admixture with other active agents for example other plant-protection agents or pesticides.

An improvement in the intensity and speed of action can be obtained, for example, by addition of suitable adjuvants, such as organic solvents, wetting agents and oils. Such additives may allow a decrease in the dose.

The designated active ingredients or their mixtures can suitably be used, for example, as powders, dusts, granules, solutions, emulsions or suspensions, with the addition of liquid and/or solid carriers and/or diluents and, optionally, binding, wetting, emulsifying and/or dispersing adjuvants.

Suitable liquid carriers are, for example aliphatic and aromatic hydrocarbons, such as benzene, toluene, xylene, cyclohexanone, isophorone, dimethyl sulphoxide, dimethylformamide and other mineral-oil fractions and plant oils.

Suitable solid carriers include mineral earths, e.g. bentonite, silica gel, talc, kaolin, attapulgite, limestone, silicic acid and plant products, e.g. flours.

As surface-active agents there can be used for example calcium lignosulphonate, polyoxyethylenealkylphenyl ethers, naphthalenesulphonic acids and their salts, phenolsulphonic acids and their salts, formaldehyde condensates, fatty alcohol sulphates, as well as substituted benzenesulphonic acids and their salts.

The percentage of the active ingredient(s) in the various preparations can vary within wide limits. For example, the compositions can contain about 10 to 90 percent by weight active ingredients, and about 90 to 10 percent by weight liquid or solid carriers, as well as, optionally up to 20 percent by weight of surfactant.

The agents can be applied in customary fashion, for example with water as the carrier in spray mixture volumes of approximately 100 to 1,000 l/ha. The agents can be applied using low-volume or ultra-low-volume techniques or in the form of so-called microgranules.

The preparation of these formulations can be carried out in known manner, for example by milling or mixing processes. Optionally, individual components can be mixed just before use for example by the so-called commonly used tank-mixing method.

The following Examples illustrate the use of compositions of the invention.

The calculation of synergistic effect is carried out according to S R Colby "Calculating Synergistic and Antagonistic Response to Herbicide Combinations" , Weeds, 15/1, 1967 pages 20 to 22. In this the following formula was used:

$$E = X + Y - \frac{XY}{100}$$

in which

X = the herbicidal activity (%) of substance A at a rate of p g/ha.

Y = the herbicidal activity (%) of substance B at a rate of q g/ha., and

E = the expected additive activity of the herbicide (%) of the substances A + B at a rate of p + q g/ha.

If the observed value is greater than the value of E calculated according to Colby, the combination shows synergistic activity.

Experiments

In a greenhouse the plant species shown in the tables were treated pre-emergently with the components at the stated rates. The compositions were diluted with 500 litres of water and sprayed over the soil. Three weeks after treatment the herbicidal effect was evaluated. In the examples component I is 1-[6-fluoro-2-oxo-3-(2-propynyl)-2,3-dihydrobenzothiazol-5-yl]-3,4-dimethyl-3-pyrroline-2,5(1H)-dione

Example 1

**Mixture with atrazine (component II)**

*Abutilon theophrasti*

| Component | Rate (g/ha) | Herbicidal Activity % | E (according to Colby) |
|---|---|---|---|
| I | 20 | 30 | |
| II | 20<br>80 | 0<br>5 | |
| I + II | 20 + 20<br>20 + 80 | 95<br>95 | (30)<br>(33) |

Example 2

**Mixture with linuron (component II)**

*Bidens pilosa*

| Component | Rate (g/ha) | Herbicidal Activity % | E (according to Colby) |
|---|---|---|---|
| I | 10<br>20 | 40<br>40 | |
| II | 50 | 0 | |
| I + II | 10 + 50<br>20 + 50 | 70<br>99 | (40)<br>(40) |

Example 3

Mixtures with alachlor (component II)

Setaria viridis

| Component | Rate (g/ha) | Herbicidal Activity % | E (according to Colby) |
|---|---|---|---|
| I | 5<br>10 | 5<br>30 | |
| II | 50<br>100 | 40<br>70 | |
| I + II | 5 + 50<br>5 + 100<br>10 + 50<br>10 + 10 | 60<br>85<br>95<br>98 | (43)<br>(71)<br>(58)<br>(79) |

Example 4

Mixtures with metolachlor (component II)

Digitaria ischaemum

| Component | Rate (g/ha) | Herbicidal Activity % | E (according to Colby) |
|---|---|---|---|
| I | 5<br>10 | 30<br>60 | |
| II | 25 | 10 | |
| I + II | 5 + 25<br>10 + 25 | 80<br>90 | (37)<br>(64) |

Example 5

Mixtures with trifluralin (component II)

Veronica persica

| Component | Rate (g/ha) | Herbicidal Activity % | E (according to Colby) |
|---|---|---|---|
| I | 5 | 50 | |
| II | 100<br>200 | 0<br>60 | |
| I + II | 5 + 100<br>5 + 200 | 80<br>95 | (50)<br>(80) |

Example 6

Mixtures with isoproturon (component II)

Stellaria media

| Component | Rate (g/ha) | Herbicidal Activity % | E (according to Colby) |
|---|---|---|---|
| I | 5<br>10 | 50<br>90 | |
| II | 25<br>50<br>100 | 0<br>0<br>0 | |
| I + II | 5 + 25<br>5 + 50<br>5 + 100<br>10 + 25<br>10 + 50<br>10 + 100 | 98<br>98<br>99<br>100<br>100<br>100 | (50)<br>(50)<br>(50)<br>(90)<br>(90)<br>(90) |

Example 7

Mixtures with propachlor (component II)

Solanum nigrum

| Component | Rate (g/ha) | Herbicidal Activity % | E (according to Colby) |
|---|---|---|---|
| I | 5 | 80 | |
| II | 125<br>250<br>500 | 0<br>0<br>10 | |
| I + II | 5 + 125<br>5 + 250<br>5 + 500 | 99<br>99<br>99 | (80)<br>(80)<br>(82) |

Example 8

Mixtures with methabenzthiazuron (component II)

Setaria viridis

| Component | Rate (g/ha) | Herbicidal Activity % | E (according to Colby) |
|---|---|---|---|
| I | 40 | 70 | |
| II | 200<br>400 | 0<br>10 | |
| I + II | 40 + 200<br>40 + 400 | 90<br>97 | (70)<br>(73) |

Example 9

Mixtures with metribuzin (component II)

Abutilon theophrasti

| Component | Rate (g/ha) | Herbicidal Activity % | E (according to Colby) |
|---|---|---|---|
| I | 10<br>20 | 30<br>50 | |
| II | 5<br>10 | 0<br>20 | |
| I + II | 10 + 5<br>10 + 10<br>10 + 20<br>20 + 5<br>20 + 20 | 50<br>75<br>90<br>80<br>95 | (30)<br>(44)<br>(58)<br>(30)<br>(70) |

Example 10

Mixtures with simazine (component II)

Digitaria ischaemum

| Component | Rate (g/ha) | Herbicidal Activity % | E (according to Colby) |
|---|---|---|---|
| I | 20 | 75 | |
| II | 10<br>20 | 0<br>5 | |
| I + II | 10 + 10<br>20 + 20 | 90<br>90 | (75)<br>(76) |

Example 11

Mixtures with dicamba (component II)

Panicum maximum

| Component | Rate (g/ha) | Herbicidal Activity % | E (according to Colby) |
|---|---|---|---|
| I | 20 | 70 | |
| II | 10<br>20 | 5<br>40 | |
| I + II | 20 + 10<br>20 + 20 | 95<br>98 | (72)<br>(83) |

Example 12

Mixtures with cyanazine (component II)

Portlaca oleracea

| Component | Rate (g/ha) | Herbicidal Activity % | E (according to Colby) |
|---|---|---|---|
| I | 5 | 0 | |
| II | 10<br>20 | 0<br>0 | |
| I + II | 5 + 10<br>5 + 20 | 97<br>98 | (0)<br>(0) |

Example 13

Mixtures with pendimethalin (component II)

Alpecurus myosuroides

| Component | Rate (g/ha) | Herbicidal Activity % | E (according to Colby) |
|---|---|---|---|
| I | 20<br>40 | 50<br>70 | |
| II | 100 | 0 | |
| I + II | 20 + 100<br>40 + 100 | 85<br>85 | (50)<br>(70) |

Example 14

Mixtures with flurochloridone (component II)

Setaria viridis

| Component | Rate (g/ha) | Herbicidal Activity % | E (according to Colby) |
|---|---|---|---|
| I | 20 | 40 | |
| II | 50 | 30 | |
| I + II | 20 + 50 | 70 | (58) |

Example 15

Mixtures with chlortoluron (component II)

Stellaria media

| Component | Rate (g/ha) | Herbicidal Activity % | E (according to Colby) |
|---|---|---|---|
| I | 20 | 70 | |
| II | 100<br>200 | 0<br>20 | |
| I + II | 20 + 100<br>20 + 200 | 85<br>85 | (70)<br>(76) |

Example 16

Mixtures with benfuresate (component II)

Panicum maximum

| Component | Rate (g/ha) | Herbicidal Activity % | E (according to Colby) |
|---|---|---|---|
| I | 5<br>10 | 25<br>70 | |
| II | 62.5 | 60 | |
| I + II | 5 + 62.5<br>10 + 62.5 | 95<br>95 | (70)<br>(88) |

Example 17

Mixtures with terbutryn (component II)

Echinochloa crus-galli

| Component | Rate (g/ha) | Herbicidal Activity % | E (according to Colby) |
|---|---|---|---|
| I | 5 | 0 | |
| | 10 | 0 | |
| | 20 | 0 | |
| II | 40 | 30 | |
| | 80 | 60 | |
| I + II | 5 + 80 | 70 | (60) |
| | 10 + 80 | 80 | (60) |
| | 20 + 80 | 85 | (60) |
| | 40 + 80 | 85 | (72) |

Example 18

Mixtures with ethofumesate (component II)

Galium aparine

| Component | Rate (g/ha) | Herbicidal Activity % | E (according to Colby) |
|---|---|---|---|
| I | 10 | 10 | |
| II | 100 | 60 | |
| | 200 | 90 | |
| I + II | 10 + 100 | 85 | (64) |
| | 10 + 200 | 95 | (91) |

## Claims

1. A herbicidal composition which comprises, as active components, a mixture of
   a) 1-[6-fluoro-2-oxo-3-(2-propynyl)-2,3-dihydrobenzothiazol-5-yl]-3,4-dimethyl-3-pyrroline-2,5(1H)-dione and
   b) a herbicide from the groups of those which directly or indirectly, demonstrate inhibition of cell division or possess growth promotion activity.

2. A composition according to claim 1 which contains as component b), a herbicide which directly or indirectly inhibits photosynthesis selected from the group consisting of atrazine, cyanazine, simazine,

metribuzin, linuron, isoproturon, methabenzthiazuron, chlortoluron, terbutryn and flurochloridone.

**3.** A composition according to claim 1 which contains as component b), a herbicide which demonstrates inhibition of cell division selected from the group consisting of pendimethalin, benfuresate, alachlor, metolachlor, propachlor, trifluralin and ethofumesate.

**4.** A composition according to claim 1 which contains as component b), a herbicide that possesses growth regulant activity, such as dicamba.

**5.** A composition according to any one of the preceding claims in which the weight ratio of component a) to b) is between 1:100 and 50:1.

**6.** A method of combating weeds which comprises applying to the weeds or their locus a composition as claimed in any one of the preceding claims 1.